(19) **Europäisches Patentamt**

**European Patent Office**

**Office européen des brevets**

(11) **EP 1 089 221 A2**

(12) **EUROPEAN PATENT APPLICATION**

(43) Date of publication:
04.04.2001 Bulletin 2001/14

(51) Int. Cl.[7]: **G06N 3/04**, G06N 3/063

(21) Application number: 00308088.4

(22) Date of filing: 18.09.2000

(84) Designated Contracting States:
**AT BE CH CY DE DK ES FI FR GB GR IE IT LI LU
MC NL PT SE**
Designated Extension States:
**AL LT LV MK RO SI**

(30) Priority: 29.09.1999 US 407536

(71) Applicant:
**LUCENT TECHNOLOGIES INC.
Murray Hill, New Jersey 07974-0636 (US)**

(72) Inventor: **Sarpeshkar, Rahul
Cambridge, MA 02138 (US)**

(74) Representative:
**Watts, Christopher Malcolm Kelway, Dr. et al
Lucent Technologies (UK) Ltd,
5 Mornington Road
Woodford Green Essex, IG8 0TU (GB)**

(54) **Spike-based hybrid computation**

(57) Hybrid analog/digital computational structures, organizations and methods employing spiking signals are used to efficiently and accurately represent and process information. Illustratively, these hybrid techniques are employed in systems with a multi-wire signal representation dividing information processing into independent parts suitable for processing using low-precision distributed analog stages. A hybrid state machine (HSM) comprising an analog part providing storage of analog variables and analog processing primitives as well as a digital part providing combinational logic and digital state devices responsive to spiking signals from the analog part is described and applied in solving a number of important problems;

the analog part of an HSM is responsive to

a binary digital vector from the digital part.

FIG. 7

EP 1 089 221 A2

**Description**

**Related Applications**

Subject matter relating to that of the present application is presented in four U.S. Patent applications filed concurrently with this application: *Spiking Neuron Circuit* and *Current-Mode Spike-Based Analog-to-Digital Conversion*, by R. Sarpeshkar; and *A Spike-Triggered Asynchronous Finite State Machine*, and *An Edge-Triggered Toggle Flip-Flop Circuit*, by R. Sarpeshkar and R. Herrera. These applications are assigned to the assignee of the present application and are hereby incorporated by reference in the present application.

**Field Of The Invention**

The present invention relates generally to the field of electronic computers and computation. More particularly, the present invention relates, in one aspect, to hybrid analog and digital computation. Still more particularly, aspects of the present invention relate to spike-based computing using hybrid analog-digital techniques and organizations.

**Background Of The Invention**

Arguments have long raged in computing circles regarding the relative merits of analog computation and digital computation. In R. Sarpeshkar, "Analog Versus Digital: Extrapolating from Electronics to Neurobiology," *Neural Computation* Vol. 10, 1999, pp. 1601-1638 these viewpoints are reviewed and analyzed. Representative pros and cons of analog and digital computation from a signal processing viewpoint are tabulated at pp. 1604-1605 of that paper, including:

| ANALOG | DIGITAL |
|---|---|
| 1. Compute with continuous values of physical variables in some range, typically voltages between the lower and upper power-supply rail voltages. | Compute with discrete values of physical variables, typically the lower and upper power-supply rail voltages denotes by 0 and 1. |
| 2. Primitives of computation arise from the physics of the computing devices: | Primitives of computation arise from the mathematics of Boolean logic: |
| physical relations of transistor, capacitors, resistors, floating-gate device, Kirchoff's current and voltage Lawa etc. The use of these primitives is an art form, and does not lend itself easily to automation. The amount of computation performed by a single transistor is high. | logical relations like AND, OR, NOT, NAND, XOR. The use of these primitives is a science, and lends itself easily to automation. The transistor is used as a switch, and the amount of computation performed by a single transistor is low. |
| 3. One wire represents many bits of information at a given time. | One wire represents 1 bit of information at a given time. |
| 4. Computation is offset-prone since it's sensitive to mismatches in the parameters of the physical devices. The degradation in performance is graceful. | Computation is not offset-prove since it's insensitive to mismatches in the parameters of the physical devices. However, a single bit error can result in catastrophic failure |
| 5. Noise is generally due to thermal fluctuations in physical devices. | Noise is due to roundoff error and temporal aliasing. |
| 6. Signal is not restored at each stage of the computation. | Signal is restored to 1 or 0 at each stage of the computation. |
| 7. In a cascade of analog stages, noise starts to accumulate. Thus, complex systems with many stages are difficult to build. | Roundoff-error does not accumulate significantly for many computations. Thus, complex systems with many stages are easy to build. |
| 8. Not easily programmable. | Easily programmable. |

A detailed quantitative analysis presented in the above-cited Sarpeshkar paper (which paper is hereby incorporated by reference in the present disclosure as if set forth in its entirety herein), leads to a conclusion that, for the same computation performed in the same amount of time, analog computation consumes less power or less area on a computational semiconductor chip than digital computation - provided that devices operate with low signal-to-noise ratios (at low precision). These results obtain for present day analog devices and for a range of operating conditions and levels of complexity. However, such analyses are not relevant to tasks of vast complexity or for tasks requiring vast amounts of information processing. This is so because analog systems of today are incapable of handling such tasks; they do not have a general and scalable signal restoration paradigm for preserving signals in such systems.

Such efficiencies as can be achieved using analog devices arise in part because analog physical primitives exploit underlying technology rather than perform digital logical primitives that model all computing devices as controllable switches. However, the efficiency advantages of analog computations persist only so long as computation proceeds with very low noise on one wire. As computation proceeds with increasingly higher precision on one wire, increasingly large power/area resources must be used to reduce thermal noise/offset to levels compatible with this precision. Throughout this description it proves useful to employ the language "offset" to refer to both 1/f noise and offsets in physical parameters of transistors, since they are both caused by similar mechanisms. See further the incorporated Sarpeshkar paper.

The random nature of the physical laws behind thermal noise and offset - such as the law of large numbers, and laws of thermodynamics - cause single-wire device power/area to scale as a power-law function of the signal-to-noise ratio. In contrast, the multi-wire representation of information used in digital systems divides information processing into independent bit parts that a plurality of 1-bit processing stages can collectively handle more efficiently than is possible in one more precise single-wire analog processing stage.

This intuitive notion is mathematically expressed by a by a logarithmic scaling of the resource costs of digital computation with signal-to-noise ratio. As a simple example, 8-bit addition at moderate speeds is very easily implemented on one wire through the use of Kirchoff's current law in analog systems; 16-bit addition would be almost $(2^8)^2$ times more difficult to implement in terms of power or area. By way of contrast, 16-bit addition is only twice as difficult as 8-bit addition in digital systems because of the divide-and-conquer multi-wire approach of digital computation.

While attempts at combining aspects of analog and digital computation have been pursued with varying success, no general approach has proven satisfactory for the full range of efficient computation using the best aspects of both realms.

## Summary Of The Invention

Limitations of the prior art are overcome and a technical advance is made in accordance with the present invention described in illustrative embodiments herein. In one aspect the present invention provides computational structures and techniques that are not purely analog or purely digital, but a hybrid mixture of both forms. These hybrid computational structures and organizations advantageously employ spiking signals similar to those present in animal neural systems to efficiently and accurately represent and process information. Advantageously, illustrative application of present inventive techniques employs moderate-precision analog elements to collectively compute a precise result; interleaved discrete signal restoration of the analog information prevents analog noise and offset from degrading the computational results.

In one illustrative embodiment, these hybrid techniques are employed in systems with a multi-wire representation of information that divides information processing into independent moderate-precision parts suitable for processing using moderate-precision analog stages. Unlike digital computation, precision is not necessarily limited in these illustrative organizations to 1-bit per wire. Thus, with appropriate operating speeds and noise associated with particular implementing technologies, suitable configuration and adaptation permits preservation of needed precision. Likewise, computing primitives do not necessarily arise from logic; they can include analog primitives.

Operation of such analog arrangements is conveniently referred to as distributed analog computation. Distributed analog systems in accordance with the present illustrative embodiments are to be distinguished from so-called multi-level logic schemes, which can convey more than 1 bit of information per wire but nevertheless employ logical primitives that define rules for switching between various levels.

Noise immunity is advantageously achieved in current illustrative embodiments via frequent discrete signal restoration of analog signals on low-precision channels. Such signal restoration is performed to a precision required of the channel. For example, a 2-bit precise analog channel is restored to the one of four discrete levels closest to the analog value. Since analog primitives are resolution independent, their implementation is a weak function of the precision that we choose to restore them to.

Spiking signals prove to be well adapted for hybrid computing, in part because the number of spikes is a discrete (countable) value, while inter-spike intervals are analog values. Spikes are advantageously used for, *inter alia*, overranging-and-reset signals to solve dynamic-range problems for analog variables, as start and stop asynchronous event signals, for signal restoration, and as the interface between continuous analog dynamical systems and discrete dynamical systems in an important novel machine that we term a *hybrid state machine* (HSM). The HSM is an extension of known digital finite state machines and may be applied in 2-step, successive-subranging, or pipelined analog-to-digital conversion, in pattern recognition with learning, in vector quantization, in sequence recognition and many other applications.

In multilevel logic schemes, the circuitry necessary to implement the logical rules of the computation and the switching power dissipation increases as a strong function of the number of levels. Since analog primitives are resolution independent, the implementation of our hybrid schemes is a weak function of the precision at which we choose to perform signal restoration. Switching power dissipation in our hybrid systems occurs only when we perform signal restoration, not throughout the computation.

## Brief Description Of The Drawing

The above-summarized description of illustrative embodiments of the present invention will be more fully understood upon a consideration of the following detailed description and the attached drawing, wherein:

FIGs. 1 A-C illustrate and contrast respective analog, distributed analog and digital information representations of information in accordance with one aspect of the present invention.

FIG. 2 shows an illustrative signal restoration organization for use with distributed analog computation in accordance with one aspect of the present invention.

FIG. 3 shows an illustrative architecture for hybrid computation including both quiet and noisy analog processing elements in accordance with an aspect of the present invention.

FIG. 4 shows spike-based computer signal representations for illustrative hybrid computing systems.

FIG. 5 shows illustrative signal processing of input signals to generate corresponding spiking signals.

FIG. 6 shows a prior art finite state machine (FSM).

FIG. 7 shows a hybrid state machine arrangement in accordance with an illustrative embodiments of the present invention.

FIG. 8 shows a time evolution of neurons applied to a winner-take-all computation using the arrangement of FIG. 7.

FIG. 9 shows a time evolution of neurons applied to a pattern recognition computation using the arrangement of FIG. 7.

FIG. 10 shows signals useful in understanding synchrony in pattern recognition output.

FIG. 11 shows a building block circuit useful for measuring the time difference between spikes; such measurements provide useful information for learning in hybrid state machines.

FIGs. 12A and 12B show building block circuits for measuring the order of two spikes in the context of a hybrid state machine.

FIGs. 13A-C provide a comparison of counting using digital, analog and a hybrid technique employing some of the principles of the present invention.

FIGs. 14A-B show circuits useful for creating pulse-to-charge synapses.

## Detailed Description

*Illustrative System Overview*

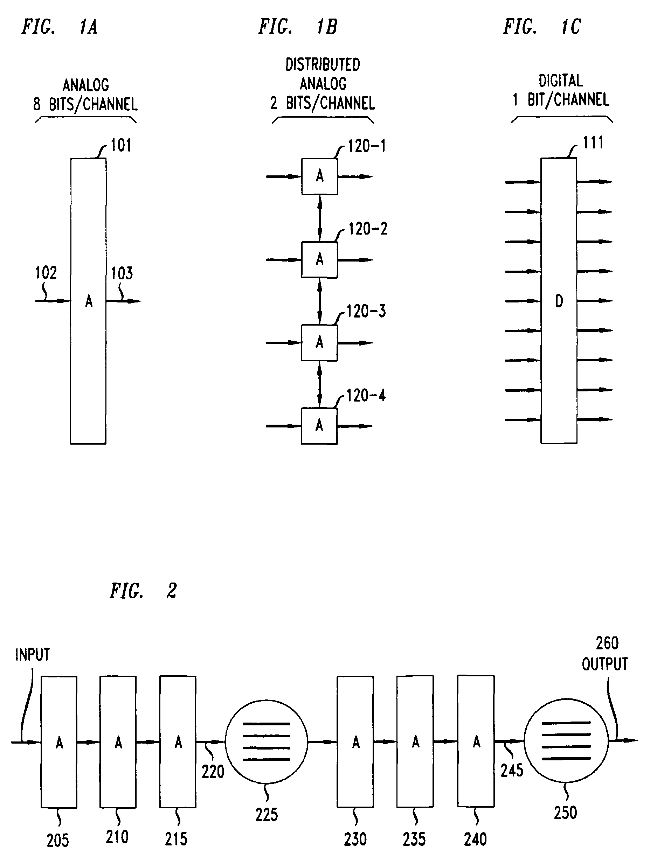

FIGs. 1A-C illustrate and contrast respective analog, distributed analog and digital information representation and processing in accordance with one aspect of the present invention. In FIG. 1A, a traditional single-wire 8-bit analog channel 101 is shown having a single input 102 and a single output 103. The circuit of FIG. 1A is contrasted with the 8-bit 8-channel (1-bit/channel) digital arrangement 111 of FIG. 1C. In FIG. 1C, each input and each output represents a single bit. By contrast with the circuits of both FIG. 1A and FIG. 1C, the illustrative distributed channel circuit of FIG. 1B is seen to comprise four communicating channels 120-1 through 120-4, each of which represents 2 bits/channel in accordance with one aspect of the present invention.

As used in the present description, the term *channel* should be understood to include (as appropriate for a given context) not only one or more transmission paths (*e.g.*, wires) for conveying continuous or discrete analog information and/or discrete digital signals, but also such storage, incrementing, coupling, rounding and other processing elements as may be used to combine, store and transfer computing primitives and signals.

More specifically, referencing the arrangement of FIG. 1B, blocks 120-1 through 120-4 (each labeled "A") represent interacting low-precision analog processors. It will be appreciated that each of the low-precision analog processors will exhibit a precision of operations depending on the device characteristics and the nature of the signals to be processed. The incorporated Sarpeshkar paper provides further background on tradeoffs between computation and communication in choosing precision for analog channels.

FIG. 2 illustrates periodic signal restoration via analog-digital-analog (A/D/A) conversion after a number of analog operations. The A/D/A behaves simply like an analog-to-digital converter followed by a digital-to-analog converter, though not necessarily implemented as such. Effectively, A/D/A 225 functions to restore the analog signal appearing on lead 220 after analog operations by illustrative analog processors 205, 210 and 215 to one of a few discrete levels known as "attractor levels." The number of attractor levels scales exponentially with the precision of the analog channels. In order for this signal-restoration scheme to work, the distance between attractor levels must be much greater (typically a few standard deviations depending on how high a bit error rate is tolerable) than the accumulated noise and offset between restoration stages. The signal restored to a discrete analog value at the output of A/D/A 225 is then illustratively processed by other analog processors (*e.g.*, processors 230, 235 and 240 in FIG. 2) before the output on analog path 245 is again restored by an A/D/A circuit 250 to produce the final output on single-wire path 260.

The signal-restoration arrangement of FIG. 2 is a generalization of the 0-or-1 restoration scheme of typical prior art digital systems. Such digital systems typically require that the noise between stages be much less than the distance in voltage separation between the voltage for a '0' and that for a '1'. The optimal amount of analog processing that may be performed before a signal restoration is implemented will vary with application and is analyzed in the incorporated Sarpeshkar paper. Prior A/D/A circuits have been proposed for use as building blocks for certain storage and processing applications. See, for example, G. Cauwenberghs, "A Micropower CMOS Algorithmic A/D/A Converter, *IEEE Transactions on Circuits and Systems I., Fundamental Theory and Applications, Vol*. 42 (1995), No. 11, pp. 913-919. Such prior use did not extend, however, to use of A/D/A arrangements in hybrid systems as presently disclosed.

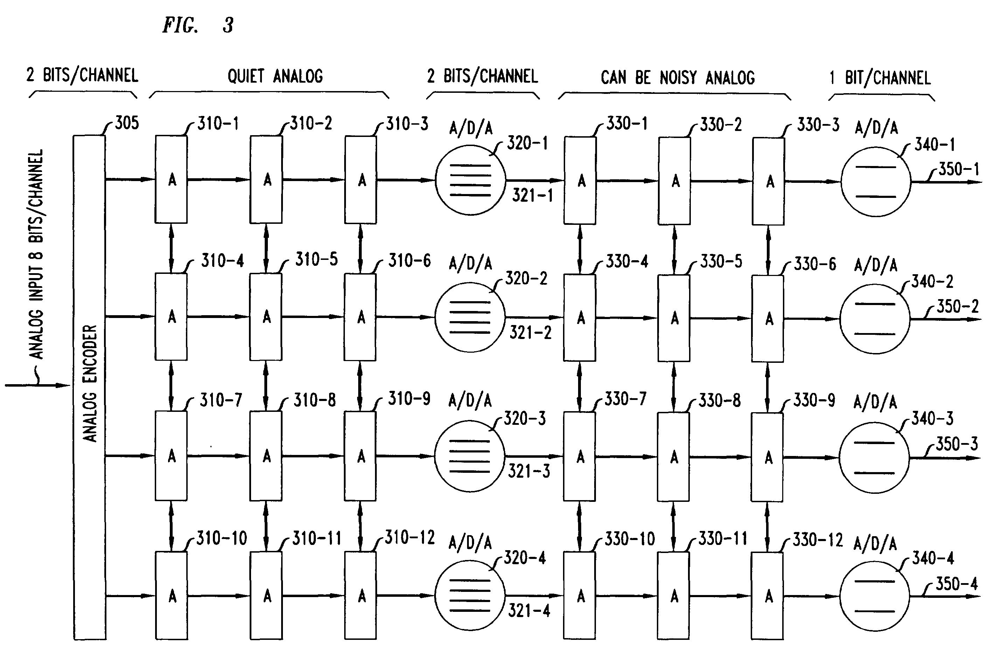

FIG. 3 shows an illustrative system employing distributed analog processors and restoration of signals to discrete values after such processing. More specifically, an illustrative encoder 305 receives input on channel 300 from a source of 8-bit/channel information and encodes this information into four 2-bit/channel distributed analog processors. Encoder 305 will typically be an A/D converter, a bank-of-bandpass filters, or an electronic cochlea or retina. See C.A. Mead, *Analog VLSI and Neural Systems*, Addison-Wesley, Reading, MA, 1989, for illustrative electronic cochlea and retina circuits.

This encoding cost incurred by encoder 305 in FIG. 3 is illustratively a purely analog computation whose costs are paid once at the front end of the system. The information output from encoder 305 is then processed in a distributed analog fashion, with illustrative interacting analog blocks 310-1 through 310-12, and is periodically restored via interacting A/D/A blocks 320-1 through 320-4. The outputs of A/D/A circuits 321-i are again applied to interconnected distributed analog processors, here 330-1, 4, 7, and 10 as shown in FIG. 3. Finally, the outputs of analog processors 330-3,6,9 and 12 are applied to respective A/D/A circuits 340-1 through 340-4 to again restore the processed signals to discrete levels on output leads 350-1 through 350-4.

FIG. 3 illustrates by example the use of two different levels of precision in performing the level restorations in A/D/A circuits. Thus, in performing restoration of the output signal values of computations that preserve information (illustratively those outputs from analog processors 310-3, 6, 9, and 12), restorations by A/D/A circuits are performed to a (relatively) fine level of precision (2 bits). In contrast, the A/D/A operations by A/D/A circuits 350-1 through 350-4 are illustratively performed to 1-bit precision, as befits restorations of output signals of computations that compress information (e.g. decision making, pattern recognition etc.). As will be clear to those skilled in the art, analog processing blocks prior to the coarse restoration stages 340-i will tolerate a higher level of noise because of the greater separation of discrete levels.

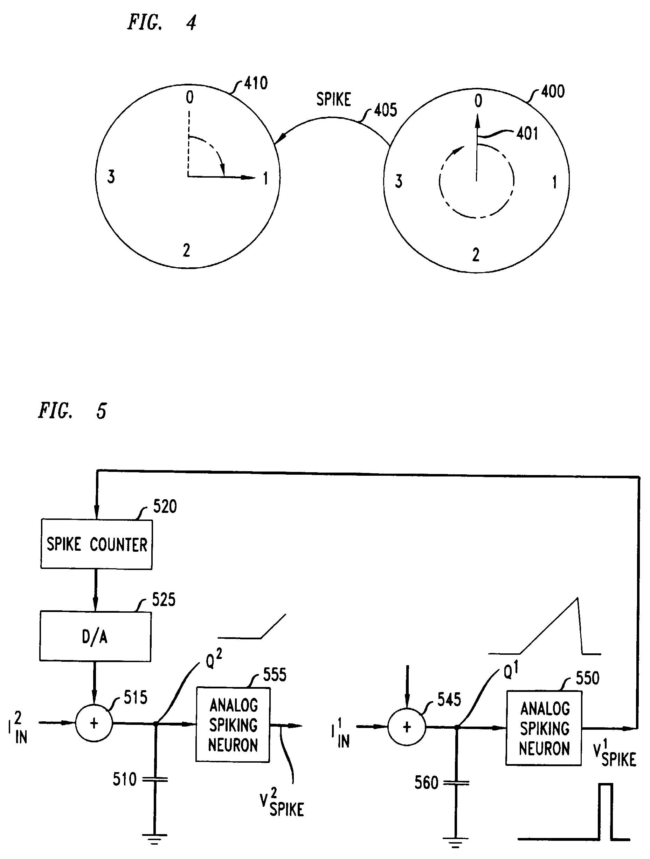

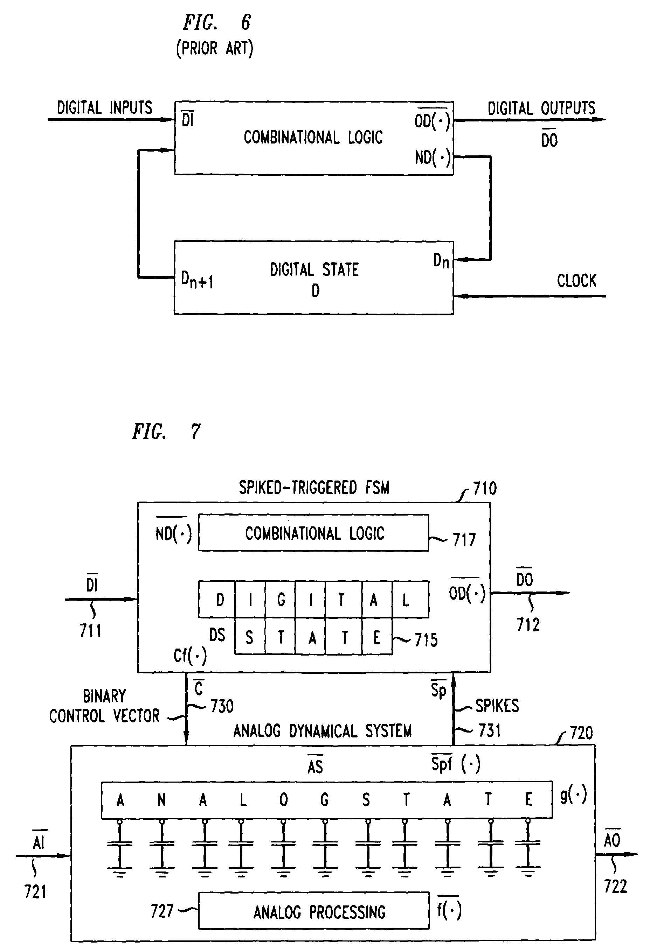

Mechanisms for implementing distributed analog computation and discrete signal restoration will now be described in further detail with reference to FIGs. 4 and 5. It proves convenient in embodiments of the present invention to represent an analog state variable by the quantity of charge on a capacitor, $Q_{state}$. FIG. 5 shows illustrative capacitors 510 and 560 that serve to receive input charge. Each capacitor's state is advantageously changed by charging the capacitor with the sum of all its input currents $\Sigma_i I_i$. Unless otherwise mentioned, we will, for simplicity, also assume that all $I_i$ are positive, though no such restriction applies in the general case. The time period for integration of applied currents is taken as $t_{in}$, a period that is conveniently gated by a pulse input, or is ungated. It will be noted that in this representation, primitives already exist for an add operations (Kirchoff's current law) and multiply ($Q = I \times t$). Since the inputs $I_i$ may themselves be linear or nonlinear functions of other input currents or voltages, such capacitor-based circuits provide, in general, the ability to implement a gated summation of various nonlinear input terms.

At some point, due to continuous charging, every analog state variable will likely reach the upper limit of its dynamic range, e.g., the power supply voltage - or a fraction of the power supply voltage. It proves convenient in many contexts to prevent this from occurring, as will be appreciated from the following discussion, So, a threshold level of charge, $Q_T$, is selected, such that if $Q_{state} \leq Q_T$, charging continues. But, if $Q_{state} > Q_T$, the state variable is reset to 0, and a signal is sent to a neighboring channel indicating that we have performed a reset; charging then resumes. Advantageously, the signal sent to the neighboring channel takes the form of a spike signal of the form described, e.g., in my incorporated patent application entitled "Spiking Neuron Circuit" filed concurrently with the present application and assigned to the assignee of the present application. The channel to which the illustrative spike signal is sent advantageously includes a similar charge-and-reset unit on another nearby capacitor. The spike then causes the neighboring channel to increment its charge by a discrete amount that is typically a fraction of $Q_T$.

FIG. 4 illustrates the charge-and-fire operation just described. Thus, a first circle 400 represents real numbers by their angular position of an arrow or vector 401 on the unit circle. When the phase of the rotating vector reaches $2\pi$, the representation "wraps around" by resetting to 0, with the accompanying transmission of a (spike or other) signal 405 to the neighboring channel (represented by circle 410). The illustrative spike signal indicates that the preceding accumulate-and-fire circuit has caused the corresponding charge signal representation to perform one full revolution.

The adjacent channel, with its corresponding unit circle 410, keeps track of the number of full revolutions performed at its neighbor circle 400, by a rotational increment at circle 410. The charge thus deposited on the capacitor corresponding to the angular displacement on circle 410 typically reflects a charge of less than $Q_T$ on that capacitor. This idea can be repeated ad infinitum, so that complete revolutions of the cited neighbor circle are accounted for by partial increments of yet another channel, and so on. It will be recognized that the approach just described overcomes limitations of the prior art regarding limited-dynamic-range for an analog variable. The above-described strategy represents information about a variable across many channels.

So far operations have been defined on the set of real numbers. However, in accordance with the hybrid approach of representing only part of the information in each channel, it was recognized that it becomes necessary at some point in processing to restore and preserve that information. Thus, it becomes necessary to quantize a channel angle by rounding it up or down to the nearest discrete angle to which it is to be restored. For example, if two bits of information are represented per channel, at the time of signal restoration, only the quadrant of angular space the angular state is in is of concern. Thus, in the illustrative circumstances of FIG. 4, it is only necessary to round the state variable to whichever angle in the set $(0,\pi/2,\pi,3\pi/2,2\pi)$ the vector is closest to. If the vector 401 is closest to $2\pi$, we fire a spike and reset the variable to zero. For brevity, angles in the latter set are denoted on the circle by their ratio to $\pi/2$. The mathematics behind these operations is formalized by the following

$$q_{state} = n(\pi/2) + \varepsilon \tag{1}$$

$$n \in \{0,1,2,3\}$$

$$0 \leq \varepsilon \leq (\pi/2)$$

$$[q_{state}] = n + \Theta(\varepsilon - \pi/4)$$

$$q_{state} = \omega_{in} \times t_{in}$$

The function $\Theta(x)$ is the Heaviside function which is '1', if $x > 0$ and 0 if $x \leq 0$. The function $[x]$ is the floor function that rounds a real number to the nearest integer. The symbol $\omega$ represents an angular frequency that is determined by the sum of the charging currents.

One way of preserving the 2-bit representation across channels in is to increment the neighboring channel by $\pi/2$ whenever the current channel has finished a full revolution of $2\pi$. Such a scheme is illustrated in FIG. 5, where we charge the neighboring channel (the capacitor 510) by 1 unit when the current channel (capacitor 560) has completed a full revolution of 4 units. Continuing, if full revolutions of a neighbor result in a quarter-revolution increments of yet another neighbor to the left of it, and so on, a method is provided for approximating an analog number in a number representation based on radix 4.

In general, each of the channels of the described distributed number representation may also have its own analog input currents that arise from a source other than the immediate neighbor to their right. Thus, in the circuit of FIG. 5, spiking outputs from spiking neuron circuit 550 reflecting a full charge on capacitor 560 ($2\pi$ rotation of its corresponding vector) are applied by connection to the neighboring channel to create an incremental charge on capacitor 510 for that neighboring channel vector, The spiking signal from neuron circuit 550 advantageously is applied to current summer through a spike counter 520 and a (simple) digital-to-analog converter 525. While it proves convenient to have the number of spikes delivered at a neighbor channel summed and converted to a current for application to current summer 515 (in addition to other currents like $I_{in}^2$ in the illustrative circuit of FIG. 5), other arrangements for supplying the incremental current to the neighbor channel will occur to those skilled in the art. For example, an arriving spiking pulse can gate a standard charging current to the neighboring capacitor. This charging current may be chosen such that the charge is incremented by one unit. Such a scheme can be implemented using well-known circuit design techniques with as few as two transistors in series (one for gating and one for the current source). Any accumulated offsets due to mismatches in the current sources are irrelevant so long as we ensure that the sum of all these offsets is less than half the separation between discrete attractor levels prior to the roundoff operation.

It is again important to note that this is not a multilevel logic scheme in radix 4 because we are computing on the set of real numbers with real-numbered primitives, which are resolution independent, and rounding off to the set of integers. In contrast, multilevel logic schemes compute on the set of integers with integer primitives that are resolution dependent (the number of levels and the radix change the logical rules completely). While the presently described primitives of computation are resolution independent (the law of adding 2 real numbers is the same independent of precision), the precision to which we may round a continuous number to its nearest discrete approximation is resolution dependent.

Returning to FIG. 5, it will be noted that input currents $I_{in}^2$ other than the inter-channel spiking input from neuron circuit 550 are applied to charge a capacitor. When the capacitor has received the threshold amount of charge (the capacitor has reached a corresponding threshold voltage) it fires a spike via a spiking neuron circuit. The inputs such as $I_{in}^2$ shown in FIG. 5 represent analog input currents to the respective channel for charging the respective channel capacitor to reflect signal conditions other than the spiking input from a neighboring channel. Thus arbitrary logic and arithmetic functions can be performed on circuits based on the present inventive teachings as represented in simple form in FIG. 5.

It is clear that if 5 discrete restoration angles are employed per circle, which can be represented as (0,1,2,3,4), the present scheme would operate in radix 5. In general, operation in any radix is possible and is determined entirely by the desired level of precision per channel. For simplicity of presentation, we will for all following discussions assume that there are two bits of precision per channel unless otherwise mentioned. It should be understood, however, that the presently described systems and methods are not limited to any particular number of bits of precision per channel.

Performing an A/D conversion followed by a D/A conversion conveniently performs the A/D/A process used in the rounding operations described above and illustrated in FIGs. 2 and 3. In the process of analog-to-digital conversion, a continuous variable is converted to its nearest discrete approximation, which is generally represented as a multibit binary number. A simple D/A converter then converts the binary number back to a continuous number to implement an A/D/A; the whole A/D/A process then performs a rounding operation.

Illustrative analog-to-digital conversion architectures, circuits and processes elaborating on the above discussion are described in my incorporated patent application entitled *Current-Mode Spike-Based Analog to Digital Conversion,* filed of even date herewith. Circuitry for the complementary digital-to-analog conversion may be implemented using straightforward current-mode architectures, including those described in B. Rezhavi, *Principles of Data-Conversion System Design, e.g.*, Chapter 6, pp. 29-152, 1995, IEEE Press, New York.

*Hybrid State Machines*

The incorporated patent application entitled *Current-Mode Spike-Based Analog to Digital Conversion* includes a number of figures and descriptions relating to the flow of operations in various analog-to-digital converter architectures. In these diagrams, spikes illustratively cause transitions from one mode of operation with one configuration of neuronal charging currents to another mode of operation with another configuration of neuronal charging currents. The neuronal charging currents in turn generate spikes. In accordance with an aspect of the present invention such flow diagrams are used in the design of a variety of useful functions, with analog-to-digital conversion being a good example. Moreover, the following descriptions provide a formal method for characterizing a class of machines using these flow diagrams. The class of machines so described and characterized are conveniently referred to as *hybrid state machines* (*HSMs*). As will become apparent to those skilled in the art, hybrid state machines extend and expand the concept of finite state machines well known in digital computation.

*Finite State Machines*

An illustrative representation of a prior art finite state machine is shown in FIG. 6. As is well known to those skilled in the art, all computers may be viewed as complex finite state machines operating on information in a memory. In general terms, a finite state machine is described by a flow diagram of discrete states, with transitions between discrete states always occurring in accordance with discrete clock cycles of a periodic clock (identified as *Clk* in FIG. 7). The inputs and outputs of the finite state machine are given by the binary vectors $\overline{DI}$ and $\overline{DO}$ respectively. The state of the machine is thus specified by the integer $D$. The transition to a next state depends only on the current state, and on the current value of the inputs. That is, to describe a finite state machine completely, we need only specify

1. Its initial state, given by the integer $D$.

2. Its next state function: The function that describes what the next state of the machine will be, given its current state and its inputs. If the next state function is $\overline{ND(.)}$, then

$$D_{n+1} = \overline{ND(D_n, \overline{DI})} \tag{2}$$

3. Its output function: The function that describes how the output of the machine is a function of its current state and its inputs. If the output function is $\overline{OD(.)}$, then

$$\overline{DO} = \overline{OD(D_n, \overline{DI})} \tag{3}$$

Any finite state machine may be built with a synchronous clocked register that encodes its current state and a combinational logic block as shown in FIG. 6. For proper operation of the machine, the period of the clock must be sufficiently long so that all changes caused by the previous transition of the clock have settled before we embark on the succeeding clock transition. Finite state machines are described in great detail in any traditional textbook on digital computation, *e.g.*, see J. Rabney, *Digital Integrated Circuits,* Prentice-Hall, N.J., 1996..

*Introduction to Hybrid State Machines*

In accordance with aspects of the present invention, hybrid state machines possess both discrete digital states and continuous analog states, next-state functions for discrete and continuous states, analog and digital output functions, and interaction functions that define the interactions between the machine's analog and digital parts. In a further departure from prior digital state machines, no clock is required - all transitions are triggered by spiking events. Illustrative spiking circuits and signals are described in my incorporated patent application entitled *Spiking Neuron Circuit*. It will be appreciated that traditional finite-state machines are a special case of hybrid state machines with only digital inputs, with only discrete states, and with only one special input (the clock) that is capable of triggering transitions between states.

FIG. 7 shows the architecture of an illustrative hybrid state machine. There, the machine is shown comprising two principal parts: (i) an analog part 720 with analog states *AS* (illustratively encoded on a set of capacitor charge variables), and with analog inputs and outputs $\overline{AI}$ and $\overline{AO}$ on leads 721 and 722, respectively; and (ii) a digital part 710 with discrete states *DS* encoded on a set of register variables stored in register 715 and having digital inputs and outputs $\overline{DI}$ and $\overline{DO}$ on leads 711 and 712, respectively. Analog part 720 also comprises analog processing element (s) 727, while digital part 710 further comprises combination logic 717.

In each discrete state, digital part 710 may alter the values of a set of binary outputs (binary control vector, 730) to control switches in the analog part 720, consequently affecting the analog system's operation. In turn, analog part 720 generates spiking events as an output spike vector, $\overline{Sp}$, which triggers transitions between discrete states in digital part 710.

Digital control of the analog part 720 of the hybrid state machine of FIG. 7 may be exercised in at least three ways. In a first form of operation, D/A converters (DACs) explicitly convert digital control bits to physical analog parameters to affect the operation of analog system 720. For example, in a particular state, a current equal to $4I_0$ will illustratively be created by switching particular control bits supplied to a DAC to the bit pattern 100. This $4I_0$ current then changes the state of a capacitor in analog system 720 for which this current is a charging input. Any analog parameters such as thresholds, pulse widths, charging currents, capacitance values etc. may be altered this way.

In a second form of control exercised by digital part 710, digital control bits alter the parameters of analog system 720 by setting selected analog parameters to zero while enabling other analog parameters to express their value. For example, an analog input current, $I_{in}$, from outside the hybrid state machine may be allowed to assume its value during a sensing operation or it may be effectively set to zero, depending on the state of a specified control bit.

In a third form of control exercised by digital part 710, digital control bits may reconfigure an analog topology by turning on or off particular switches included in analog processing unit 727 in analog portion 720. For example, an operational amplifier that is present in the analog system may be disconnected from the rest of the system when a particular digital control bit is 1.

Control by analog part 720 of digital part 710 is effected by having particular spikes or particular spiking patterns trigger transitions between the discrete states. In the following descriptions it will be shown by way of illustration that arbitrary spiking patterns may be recognized by a hybrid state machine that has all its transitions triggered by the arrival of a particular spike. The particular spike used to effect this transition may differ from state to state, but any given transition is always caused by one spike. This spike-pattern-recognition machine may be embedded within a larger hybrid state machine and have the spike-pattern-recognition machine generate a spike when the appropriate spiking pattern is recognized. Thus, without loss of generality, we may assume that all hybrid state machines make transitions based on only a single triggering spike. However, transitions between discrete states may be conditioned on a spike arrival as well as on the states of other digital inputs. The digital portion of a hybrid state machine (styled a *spike-triggered finite state machine)* is described in detail in my incorporated patent application filed on the same day entitled A *Spike-Triggered Asynchronous Finite State Machine*.

Because robust nonvolatile analog memory is difficult to realize in practice, we will generally assume that analog states are volatile and destructible, at least over a long time scale. Nonvolatile digital state is easily realized using such devices as SRAMs. Thus, if it is important to store analog state variables over a time scale that is much longer than the typical leak time of capacitors used in analog part 720, it will prove convenient to perform analog-to-digital conversion to the precision needed and store the analog state digitally. Such conversion may easily be performed using techniques described, *e.g.*, in my incorporated patent application *Current-Mode Spike-Based Analog-to-Digital Conversion*.

Further, as is clear in light of the present inventive teachings, a hybrid state machine for performing A/D conversion is readily embedded within a larger hybrid state machine. In such a context, it proves convenient to transition from states of the larger machine to states of the conversion machine when we want to perform analog-to-digital conversion, and then return to the large machine when we complete the conversion. Thus, we have effectively created an analog-to-digital-conversion "subroutine" that we call from a larger (hybrid state machine) program. If we need to recreate some analog state on a capacitor, and this state has been stored digitally, we employ a standard digital-to- analog converter to charge the capacitor for a fixed amount of time with a current that represents the result of the digital-to-analog conversion.

The storage and re-creation sequence for an analog state variable is an illustrative form of signal restoration implemented via the A/D/A technique described above in connection with FIGs. 2 and 3. In recognition of physical limitations that may apply in particular cases, and in keeping with an illustrative design philosophy of hybrid computing, practitioners will not usually attempt to preserve analog information on any one capacitor to a high degree of precision.

Certain changes in discrete states in digital part 710 of the hybrid state machine of FIG. 7 may result in no changes in analog part 720. For example, in illustrative A/D architectures, *e.g.*, appearing in my incorporated patent application *Current-Mode Spike-Based Analog-to-Digital Conversion,* counting spikes in a particular phase of A/D conversion alters the discrete states of a counter - but does not affect any analog parameters. Analog parameters advantageously change only after a transition to another phase of operation; such a transition is illustratively triggered by spikes that are not related to the spikes counted in the prior phase of operation.

*Definition of a Hybrid State Machine*

With the preceding discussion of hybrid state machines as preamble, it proves advantageous to more formally define such a hybrid state machine. Thus, to specify a hybrid state machine, we need to specify its initial states, its next-state functions, its output functions, and its interaction functions that describe the interactions between its analog and digital parts. We assume (as shown in FIG. 7) that the digital inputs and outputs are given by the binary vectors $\overline{DI}$ and $\overline{DO}$ respectively, the analog inputs and outputs are given by the real vectors $\overline{AI}$ and $\overline{AO}$ respectively, the digital state is represented by the integer $DS$, the analog state is represented by the vector $\overline{AS}$ (or, sometimes, $\overline{QS}$), the spiking state variables are represented by the binary vector $\overline{Sp}$, and that the binary parameter vector $\overline{C}$ represents all the digital bits that control the analog part of the machine. The specification of the machine is then given in terms of:

1. *The initial state*. The initial state is given by specifying the initial state of $(DS, \overline{AS}, \overline{Sp})$. Usually, we initialize $DS$ to an initial state that we label 0; $\overline{AS}$ is initialized with all its components set to 0, and $\overline{Sp}$ set to have all its components at 0 as well. It will be noted, however, that a spike-triggered finite state machine of the type described in the incorporated patent application entitled *A Spike-Triggered Asynchronous Finite State Machine* may begin in a state that is represented by a combination of initial states. Thus, the machine is capable of parallel evolution from each of these states. However, such a situation is analogous to having many parallel hybrid state machines operate at once and does not detract from the simpler and more restrictive definition of a hybrid state machine given here.

2. *The next-state functions*. The digital next-state function $ND(.)$ governs the evolution of the current digital state $D_n$ to the next digital state $D_{n+l}$. Thus,

$$D_{n+l} = ND(D_n, \overline{DI}, \overline{Sp}) \qquad (4)$$

where $ND(.)$ is a logic function on all of its inputs, *i.e.* a logic function on $D_n$, the components of $\overline{DI}$, and the components of $\overline{Sp}$. All state transitions from $D_n$ to $D_{n+l}$ may occur only if at least one component of $\overline{Sp}$ is 1, i.e. transitions must be triggered by spiking activity. The analog next-state function is described in general by a differential equation

$$\frac{d\overline{AS}}{dt} = \overline{f}(\overline{AS}, \overline{AI}, \overline{AO}, \overline{C}), \qquad (5)$$

where $\overline{f(.)}$ is, in general, some linear or nonlinear function of its inputs.

3. *The output functions*. The set of digital output functions represented by $\overline{OD(.)}$ *is* given by

$$\overline{DO} = \overline{OD(DS, \overline{DI}, \overline{Sp})}, \qquad (6)$$

where $\overline{OD}(.)$ is a set of logic functions on each of its inputs. The analog output functions are defined by

$$\overline{AO} = \overline{g}(\overline{AS}, \overline{AI}, \overline{AO}, \overline{C}), \qquad (7)$$

where $\overline{g(.)}$ is, in general, some linear or nonlinear function of its inputs.

4. *The interaction functions*. The binary vector $\overline{C}$ that represents the digital control of the analog system is given by

$$\overline{C} = \overline{Cf(DS, \overline{DI})}, \qquad (8)$$

where $\overline{Cf}(.)$ is a logic function on all of its inputs. The binary vector $\overline{Sp}$ that represents the spikes output by the analog system is given by

$$\overline{Sp} = \overline{Spf(\overline{AS}, \overline{AI}, \overline{AO}, \overline{C})} \qquad (9)$$

where $\overline{Spf(.)}$ is a function that defines when spikes are fired by the analog system.

Illustrative embodiments of the present invention described in the present disclosure for implementing analog dynamical systems in hybrid state machines involve integrate-and-fire neurons. In general, however, any spike producing analog dynamical system may be used in these machines. Those skilled in the art will select analog dynamical systems to reflect the nature of the computation that the state machine is designed to perform. However, integrate-and-fire neurons lend themselves naturally to computations that involve pattern recognition in its various forms and arithmetic. In fact, analog-to-digital conversion is an example of a pattern classification problem. Other examples of hybrid state machines that implement such computations will be now be described.

To avoid obscuring the essential aspects of these applications of principles of the present invention in illustrative embodiments, well-known steps and additional states involved in performing such functions as resetting all variables, writing answers, and performing other such bookkeeping operations will be omitted.

*Winner-Take-All and Sorting*

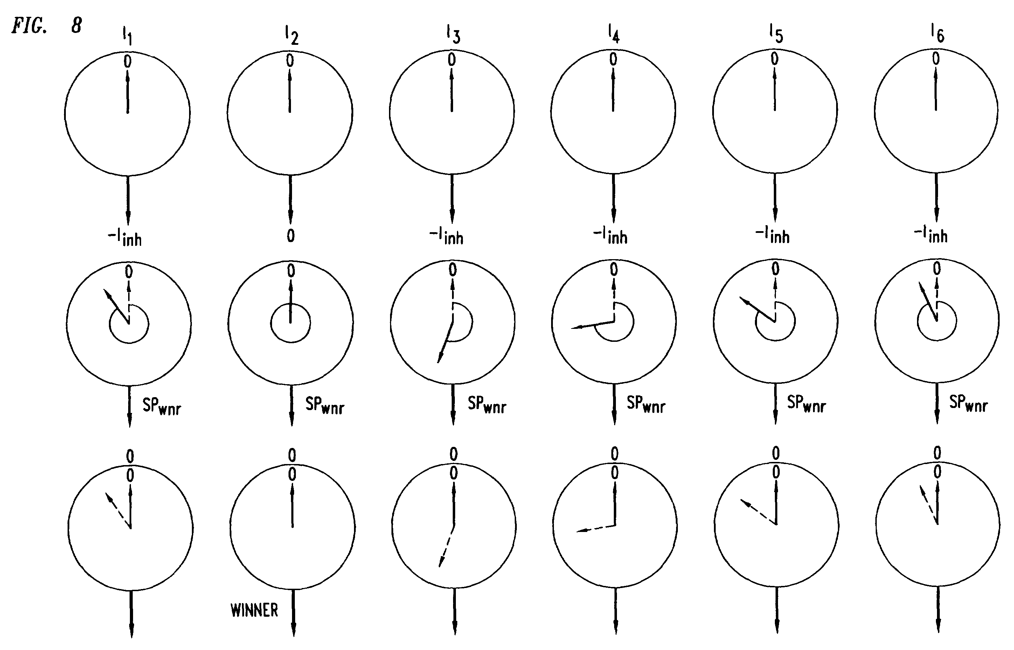

As a first current example based on the overall system structure of FIG. 7, we consider a winner-take-all computation, which here finds the analog input with the maximum value amongst a set of $N$ analog inputs. FIG. 8 illustrates the state evolution for an illustrative winner-take-all computation in a hybrid state machine. There, a set of neurons, each illustratively of the type shown in FIGs. 4 and 5, whose states have all been initialized at zero, receive respective currents corresponding to the input analog values. The largest input ($I_2$) causes its neuron to be the first to fire a spike, which spike is reported to the digital portion 710 of the hybrid machine of FIG. 7. This spike from the winning neuron causes a transition to a corresponding winning state that labels input $I_2$ to be the winner. In this winning state, the charging current to the winning neuron is shut off ($I = 0$), and strong inhibitory currents (indicated as $-I_{inh}$ in FIG. 8) are applied to all other neurons, thus resetting their charge variables to zero.

In practice, it may be preferable to perform the resetting of the non-winning neurons *during* the transition to the winning state. Thus, while the spike from the winning neuron is causing a transition, it may directly reset all non-winning inputs through interactions within the analog part of the state machine. This strategy seeks to avoid having other neurons develop into winners during the time needed to establish the first winner. To perform direct reset during the transition, the spike must have a pulse width that is sufficiently long to accomplish a complete reset of the charge on a neuron. Note that the spike-triggered finite state-machine 710 in FIG. 7, allows the machine to be in multiple discrete states simultaneously, thus allowing for multiple winners if the race is very close. Multiple winners may also arise because of mismatches in neuronal thresholds or capacitances.

The possibility of being in multiple states is naturally implemented when using a spike-triggered state machine of the type described in the incorporated patent application entitled *A Spike-Triggered Asynchronous Finite State Machine* by having one dedicated binary state variable correspond to each winning state. Thus, if a plurality of these state variables are simultaneously in the 1 state, then the inputs corresponding to those state variables are all interpreted to be winners.

The possibility of having two almost exactly simultaneous winners inhibit each other, thereby preventing either from firing a spike, is made extremely unlikely due to the positive feedback and nonlinearity inherent in the neuron. The positive feedback ensures that once the neuron's input has gone beyond its threshold of firing, it will continue to do so irrespective of the state of the input. The nonlinearity in the neuron ensures that the inhibition current that it may provide to another neuron, which is determined by its output voltage, is small unless the neuron has crossed the threshold for spiking. See further my incorporated patent application entitled *Spiking Neuron Circuit* and other treatment of neuron circuits in the art.

In another alternative embodiment, once a winner has been selected in a race, its input may be disabled (but without resetting other neurons), thus permitting then-current losers to compete to determine a second-best neuron. If after the second best neuron is determined we disable its input (but not that of the other remaining neurons), we may obtain a third-best neuron. So, by repeating the procedure until all involved neurons are accounted for, we sort the input currents according to their values. When, at any stage of the process, there is more than one winner, all winners at that stage are disabled from competing in future stages.

*Pattern Recognition*

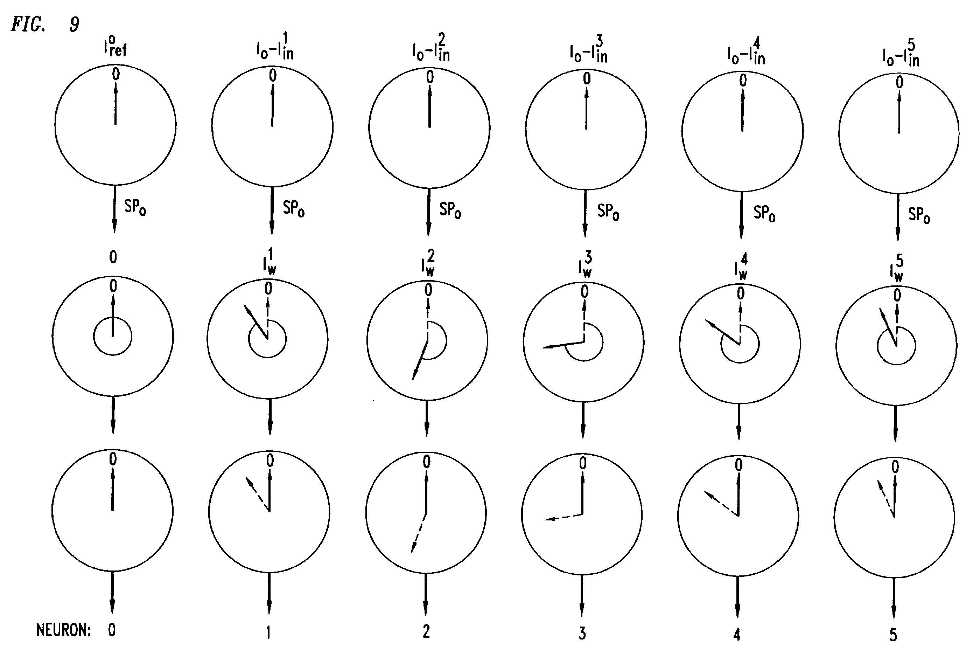

FIG. 9 shows how we may use a hybrid state machine to recognize the direction of a vector, independent of its magnitude. Thus, for a vector having $N$ components, we use $N + 1$ neurons (with $N = 5$ in FIG. 9). We begin, as is usual, by having all neurons initialized to a state with all charge variables equal to zero. One of the neurons (shown as neuron 0 in FIG. 9), serves as a timing neuron and charges with a current of $I_0$. The other neurons are labeled from 1 to $N$, and perform computations on the $N$ components of the vector.

The current $I_0$ is such that it is greater than all other current components of the input vector $\bar{I}_{\overline{in}}$, *i.e.*, $I_0 > I_{in}^i$, for all $i$. The remaining $N$ neurons are then charged with currents of $I_0 - I_{in}^i$ respectively. Thus, in the time that the timing neuron (neuron 0) finishes firing one spike, the other neurons have established positive residues proportional to $I_0 - I_{in}^i$. More precisely, the residue of the $i_{th}$ neuron is given by

$$Q_p^i = CV_T \left( \frac{I_0 - I_{in}^i}{I_0} \right) \tag{10}$$

This means that the negative residues of the neurons, $Q_n^i$, *i.e.*, the residues referenced to the threshold to spike rather than to zero, are given by

$$Q_n^i = CV_T - Q_i^p$$

$$= CV_T \left( \frac{I_{in}^i}{I_0} \right). \tag{11}$$

If we now charge the $N$ neurons with weight currents $I_w^i$ respectively, then the time to spike for each of the $i$ neurons is given by

$$t_i = \frac{Q_n^i}{I_w^i}$$

$$= CV_T \left( \frac{I_{in}^i}{I_0 I_w^i} \right). \tag{12}$$

Thus, if we have $I_{in}^i / I_w^i$ equal for all neurons, then, all neurons will fire their first spike at the same time. If the ratio $I_{in}^i / I_w^i$ is the same for all $i$, then the vectors $\bar{I_{in}}$ and $\bar{I_w}$ point in the same direction. Hence the first-spike synchrony of the neurons is a measure of the similarity in direction between the input vector $\bar{I_{in}}$ and the weight vector $\bar{I_w}$. Furthermore, Eq. (12) shows that the absolute time delay between the firing of the timing neuron spike $Sp_0$, and the spike of the $i_{th}$ neuron, $Sp_i$ measures the relative ratio of $I_{in}^i$ and $I_w^i$.

*Measuring Spike Synchrony*

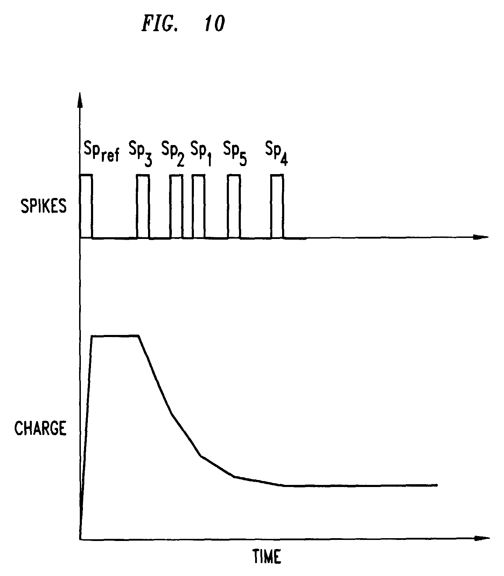

Curves relating to a method for measuring synchrony are illustrated in FIG. 10. There, a reference spike $Sp_{ref}$ causes a large burst of charge, $Q_{mx}$, to build up on a capacitor. A simple circuit that allows a current $I_{exc}$ to flow onto the capacitor only when $Sp_{ref}$ arrives can cause such charge buildup, *i.e.*, $Q_{mx} = I_{exc} t_{pw}$, where $t_{pw}$ is the pulse width of $Sp_{ref}$. We create a spike $Sp_{OR}$ which is the logical OR of the spikes from neurons 1 to $N$. As soon as $Sp_{OR}$ goes active (when the first spike from any of neurons 1 through $N$ arrives), we start to discharge the capacitor by enabling N equal leak currents, each of value $I_{lk}$, and with one leak per neuron, to turn on. However, we also shut off the leak corresponding to the $i_{th}$ neuron as soon as $Sp_i$ arrives. Thus the very first spike, $Sp_3$ in FIG. 10, will effectively yield a discharge rate due to $N - 1$ leaks when it arrives; $Sp_3$ will enable all $N$ leaks to be turned on via $Sp_{OR}$ and then immediately shut off the leak that corresponds to neuron 3.
As the spikes from the other neurons arrive, more and more leaks are turned off and the discharge rate continues to fall. When all $N$ spikes have arrived, the capacitor holds its value, which is now a measure of synchrony amongst $Sp_1$ through $Sp_N$. As soon as $Sp_i$ arrives, neuron $i$'s charging current is turned off to prevent the neuron from refiring. The capacitor on which the synchrony computation is performed may be the integration capacitor of another neuron; in that case, we must ensure that $Q_{mx} < Q_T$ to prevent spiking.
If all of the spikes arrive simultaneously, $N - 1$ leak currents get turned on but are immediately shut off because all spikes arrive at the same time. Thus, the value of charge on the capacitor is the value of the excitation charge. If the spikes are widely separated, then there is a lot of leaking between spikes and the value of the charge on the capacitor falls. If $i_{mn}$ is the index that labels the neuron from 1 to $N$ that fires the first spike, then the charge remaining on the capacitor after $N$ spikes have been fired, $Q_{rm}$, may be shown from our description and Eq. (12) to be

$$Q_{rm} = Q_{mx} - \left( CV_T\left(\frac{I_{lk}}{I_0}\right)\right)\sum_{i=1}^{i=N}\left(\frac{I_{in}^i}{I_w^i} - \frac{I_{in}^{mn}}{I_w^{mn}}\right) \qquad (13)$$

If all spikes are coincident, then all terms in the summation of Eq. (13) are zero, and $Q_{rm} = Q_{mx}$. If there is jitter amongst the spikes, then each spike contributes a penalty term in the summation that is in proportion to its distance from the first spike. If $I_{lk}$ is small compared with $I_0$, then we do not penalize jitter much, and our pattern comparison between the stored weight vector and the input vector is forgiving. If $I_{lk}$ is large compared with $I_0$, then we penalize jitter strongly, and our pattern comparison between the stored weight vector and the input vector is strict.

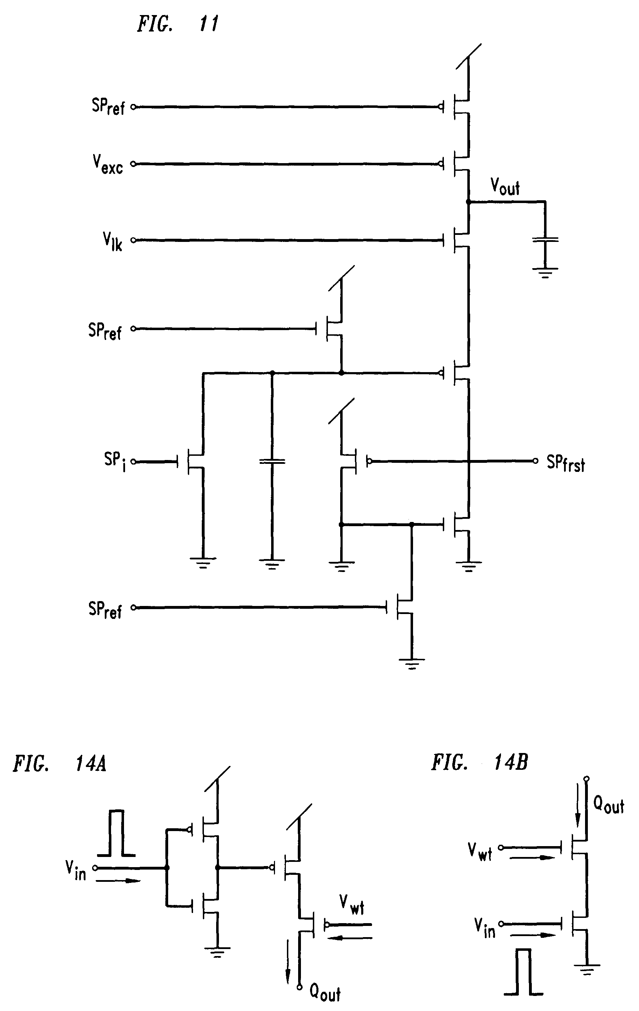

FIG. 11 shows a building-block circuit that may be used to implement synchrony-measuring computations via simple logic. In typical configuration several such building-block circuits are connected together at a common $V_{out}$ node with global inputs $V_{exc}$, $V_{lk}$, $Sp_{ref}$, and $Sp_{frst}$ that are the same across all spiking-input channels, and local inputs $Sp_i$ that differ from channel to channel. We assume that all spiking signals have inverted versions that are also available, i.e., $Sp_x$ and $\overline{Sp_x}$ are available for any $x$. The voltage $V_{exc}$ enables us to control the amount of excitation charge dumped onto the synchrony output, marked $V_{out}$ in FIG. 11. Note that $Sp_{ref}$ also serves to reset state variables on capacitors to initial values. The signal $Sp_{frst}$ corresponds to $Sp_{OR}$, and the signal $Sp_i$ corresponds to the spiking input from neuron $i$. The voltage $V_{lk}$ controls the amount of leak current due to any spike. In general, $V_{lk}$ may be different for different spikes if, e.g., we want to weight certain components more heavily than others in our recognition. For example, components with greater variability in the data that are not as important for recognition may have slow leaks in the synchrony-measuring circuit while components with small variability in the data that are important for recognition may have fast leaks in the synchrony-measuring circuit.

If $N$ is large, it proves advantageous to reduce $I_{lk}$ with respect to $I_0$ or reduce $CV_T$ with respect to $Q_{mx}$ to keep $Q_{rm}$ in Eq. (13) from reaching its saturation value of zero with very little jitter. However, reducing these values degrades the precision of the computation.

A solution that often proves optimum is to distribute the summation onto many capacitors and then add the final answers that accrue on these capacitors. Distributing the addition onto various capacitors is performed by having each capacitor get inputs from $Sp_{ref}$ to build up its excitation charge, from $Sp_{OR}$ to start the decay due to the first spike, and then have inputs from only the leak currents that correspond to the set of spikes that the capacitor is responsible for. The final addition of the residues on the capacitors after all spikes have arrived may be accomplished with hybrid state machines that perform addition of residues; these machines are described below.

For good sensitivity, $I_0$ may be adapted via feed-forward circuits to be about twice that of the maximum value of $Iin_i$. If $I_0$ is too much larger than the max. value of $I_{in}^i$ then the subtraction computation has to be done with great precision since we are subtracting very small numbers from a large number. If $I_0$ is Just a little larger than the maximum value of $I_{in}^i$, then we risk getting a negative answer in the subtraction, due to offsets, which will result in zero current in our first-quadrant computations (only positive currents implies first-quadrant operation). Winner-take-all state machines based, e.g., on the arrangement of FIG. 8 may be used to obtain the index $i$ that corresponds to the maximum value of $I_{in}^i$.

*Learning Patterns*

To learn an input pattern using present inventive teachings it proves advantageous to adjust $\overline{I_w}$ through feedback to match the direction of the input vector $\overline{I_{in}}$ which is repeatedly presented from an ensemble. A simple technique for adjusting the weight vectors is to use spike timing as a cue for learning. If we pick any arbitrary weight-vector from among the set of $I_w^i$ as a reference, then the spikes due to the other vectors will be early or late with respect to the spike fired by the reference vector. A spike-ordering circuit can detect the difference in spike timing and speed up or slow down the times of arrival of other spikes by adjusting their weight currents with respect to the reference Thus, if a spike is early, we reduce the weight current that produces this spike; if a spike is late we increase the weight current that produces the spike. Since the reference is global, all weight currents may adapt in parallel. We may stop the adaptation once a satisfactory level of synchrony has been reached. The use of spike-time adaptation compensates for any offsets in the currents and neuronal thresholds as well. We now show exemplary building-block circuits that may be used to perform learning.

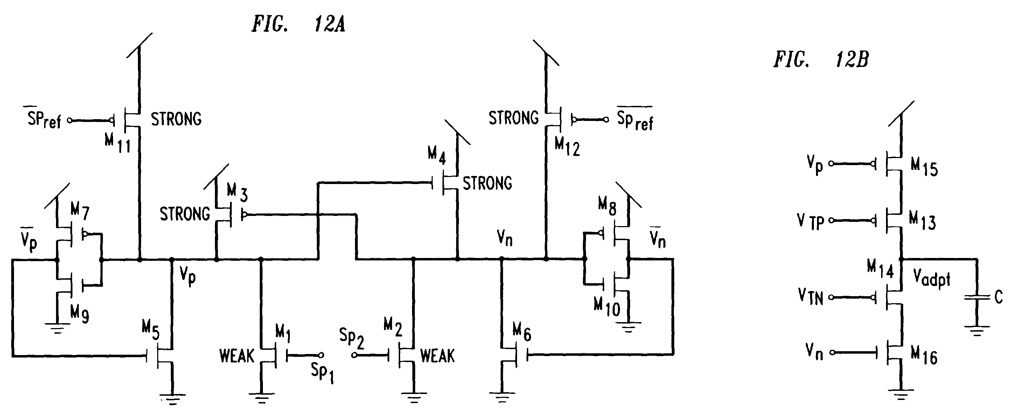

FIG. 12A shows a circuit that detects the order between 2 spikes $Sp_1$ and $Sp_2$, and FIG. 12B shows a circuit that uses outputs from this circuit to perform adaptation. The voltages $V_p$ and $V_n$ are reset to $V_{DD}$ by an active low reference spike $\overline{Sp_{ref}}$ (corresponding to $Sp_{ref}$ in FIG. 10) through transistors M11 and M12 respectively. These transistors are strong (have $W/L's$ that are large, e.g., 10 times larger) compared with the $W/Ls$ of other transistors in the circuit), and are capable of overwhelming the positive-feedback state storage performed by $M7$, $M9$, and $M5$ for $V_p$, and by M8, $M10$, and M6 for $V_n$ respectively. The positive feedback speeds up the response of the $V_p$ and $V_n$ voltages in the downward direction (towards ground), and helps store low values at either node - but is inactive in storing high values.

If $Sp_1$ arrives before $Sp_2$ then node $V_p$ is discharged to ground through the weak transistor $M1$. This transistor is able to perform a discharge because $M11$ is off at the time $Sp_1$ arrives ($\overline{Sp_{ref}}$ is only active for a short duration before $Sp_1$). As $V_p$ falls, the positive feedback is activated and speeds the falling response of $V_p$. The falling $V_p$ activates the strong transistor $M4$ which then prevents $Sp_2$ from discharging node $V_n$ when it arrives. Thus, if $Sp_1$ arrives before $Sp_2$, $V_p$ is discharged to ground, and $V_n$ is near $V_{DD}$. Similarly, if $Sp_2$ arrives before $Sp_1$, $V_n$ is discharged to ground, and $V_p$ is near $V_{DD}$. The circuit also generates the inverted versions of $V_p$ and $V_n$, *i.e.* $\overline{V_p}$ and $\overline{V_n}$ respectively.

FIG. 12B shows how the outputs of FIG. 12A may be used to perform adaptation. The voltages $V_{TP}$ and $V_{TN}$ set the time constants for upward and downward adaptation of the voltage $V_{adpt}$ respectively. Under normal operation, standard current-minor techniques would be used such that $V_{TP}$ and $V_{TN}$ are automatically adjusted to yield equal upward and downward rates of adaptation. When $V_p$ is active (low), $V_{adpt}$ adapts in an upward direction through charging of the capacitor $C$. When $V_n$ is active (low), $V_{adpt}$ adapts in a downward direction through discharging of the capacitor C. Thus, FIG. 12A and FIG. 12B implement a push-pull scheme for adapting $V_{adpt}$ in response to information about the order of spikes $Sp_1$ and $Sp_2$.

The voltage $V_{adpt}$ would in turn control a current that affects the spike order such that we have a closed feedback loop. When adaptation is finished, an A/D quantization may be performed on this current to store its learned value digitally.

It is worth noting that the circuit of FIG. 11 also provides information about spike order, but in a more analog fashion. If $Sp_{frst}$ is replaced by $Sp_1$, and $Sp_i$ by $Sp_2$, then $V_{out}$ provides an analog measure of the difference in spike times between $Sp_1$ and $Sp_2$, but only if $Sp_1$ occurs before $Sp_2$. If we have another channel of the same circuit with the roles of $Sp_1$ and $Sp_2$ reversed, then we may obtain information about spike-time differences for both spike orderings. The difference in the output voltages of two such channels then yields a signed measure of the difference in spike times between $Sp_1$ and $Sp_2$; the difference may be utilized in a feedback loop to perform learning.

*Vector Quantization*

Vector quantization is performed using the present inventive principles by performing a pattern match of an input vector to many stored weight vectors in parallel. The pattern matching is performed as described above, *e.g.*, in connection with FIG. 9. Application of the inventive pattern matching techniques generates score residues on capacitors, which are now designed to be parts of neuron circuits. The highest score residue corresponds to the best pattern match. By performing a winner-take-all first-to-spike race with identical charging currents on each of these neurons, we may identify the stored vector that best matches the input vector.

If the number of vector components is large, the pattern-match scores for each vector may be distributed across many neurons as described above. In the latter case, we enact a first-to-spike race between a set of neurons, with each set composed of a few member neurons rather than just one neuron. All sets begin charging simultaneously with identical charging currents. Each set is charged according to a sequential procedure in which members of the set charge one at a time, fire a spike, shut themselves off and then permit the next member in the set to charge; when all members of the set have finished spiking, the set fires a spike. The earliest spike arrival from a set indicates that the best pattern match occurs for the vector associated with this set.

Trellis vector quantization is an important technique for recognizing temporal sequences in speech. See, for example, B. Juan, "Design and performance of trellis vector quantizers for speech signals," *IEEE Trans. Acoustics, Speech & Sig. Proc.*, ASSP-36, 9: 1423-1431, Sept. 1988. In this technique, a finite state machine transitions between states. In each state, vector quantization to a particular set of vectors is performed, which may change from state to state. The next-state transition function depends on the outcome of the current quantization as well as the current state. Thus, various temporal ordering constraints about a sequence of input vectors may be encoded in the structure of the finite state machine and in the set of quantization vectors in each state. It is also possible to construct pruning algorithms that train the machine from input data.

Trellis vector quantization maps very naturally to an HSM architecture. The FSM of the quantizer is implemented by the spike-triggered FSM of the HSM. In each discrete state of the FSM, the weight vectors used for comparison are changed via a binary control vector that alters DAC input-bit information. First-spike information, which encodes the best pattern match in each state may directly be used to trigger transitions to the next state. Learning is accomplished by spike-time adaptation algorithms as we have previously discussed.

*Spike-Timing Pattern Recognition*

To recognize a particular timing pattern of spikes from different inputs, we first preprocess the input spikes by regenerating them after a certain delay in a set of neurons. By programming these neurons with a set of delays such that all the regenerated neuronal spikes occur at the same time, we may use spike-synchrony measures to perform recognition. A neuronal delay $d$ is achieved by storing a charging current $I$, such that $d = CV_T/I$, where $C$ is the neuronal capacitance and $V_T$ is the neuron's threshold of firing. To regenerate a spike with a certain delay, we construct a neuron that starts charging (due to a state transition in the HSM) when the relevant input spike arrives, and stops charging when the neuron's own input spike is fired. In this simple methodology, every spike in the timing pattern would require one neuron independent of whether it belonged to the same input or not. Recognizing timing patterns in spikes may be useful in feature-based speech recognition where each input spike signals the presence of a particular feature in speech (*e.g.* a stop, silence, etc.). Learning timing patterns involves mechanisms of spike-time adaptation as discussed above.

Conversely, we may use an HSM to generate any desired timing pattern of spikes by having discrete states with appropriate spike-triggering transitions and appropriate analog neuronal charging currents correspond to the inter-spike intervals in the pattern that we want to reproduce.

In the synchrony measuring circuit of FIG. 10, we may arrange to have leaks that correspond to spikes created with a long absolute delay to be small and leaks that correspond to spikes with a short absolute delay to be large. In fact, we may simply have the leak currents be proportional to the stored delay currents in the delay-generating neurons. Such an arrangement ensures that we only penalize relative jitter in spike-time arrival rather than absolute jitter. We are more forgiving about spikes that arrive with long delays because a 1 percent jitter in such spike-time arrivals generates a large absolute jitter, whereas, for spikes that arrive with short delays, a 1 percent jitter in spike-time arrivals generates a small absolute jitter.

*Hybrid Control*

Robots, whether artificial or biological, often engage in discrete behaviors, *e.g.* swimming, running, walking, with each behavior having a smooth analog-dynamical-system description. The transitions from one behavior to the other are governed by events that occur in the world or inside the mind of the robot controller (*e.g.* it gets tired). HSMs have a structure that is very similar - with a number of discrete states, within each of which the parameters of an analog dynamical system may be reconfigured. The transitions between discrete states occur by event-caused spikes. Thus, HSM's are well suited to the design of robot controllers. The control of aircraft involves hybrid control as well, with different controller configurations being used during takeoff, landing, cruising, banking etc.

*Programmable Hybrid Computers*

Existing general purpose programmable computers can be viewed as finite state machines (FSMs) that interpret instructions from a certain instruction set and operate on data stored in memory. These finite state machines often take the form of microprocessors. Since finite state machines form a subset of hybrid state machines (HSMs) as presently described, it is clear that HSMs may be configured to perform functions presently performed by FSMs, including general-purpose computation.

To efficiently exploit the computational power of an HSM, however, it is advantageous to design instructions that can exploit the computational power of its analog dynamical system as shown, for example in FIG. 7. Thus, just as there are instructions to perform addition and multiplication in conventional microprocessors, it proves convenient for HSMs to have programming instructions such as (*vector -quantize analog - Vector)*. In such context, *analog - Vector* typically refers to an external vector of analog inputs (*e.g.* from a sensory array for smell), or to an internal vector (*e.g.* from an on-chip filter-bank array used to decompose speech sounds from an external analog input).

In general application, HSMs will consist of a spike-triggered FSM whose state transitions, states, and parameters in each state are be programmed using a general or special purpose language, and an analog special-purpose dynamical system suited to the task at hand. Thus, for example, in performing vision processing, the analog part may involve resistive grids that perform image smoothing, or a filter bank for performing auditory processing.

*Hybrid Arithmetic*

As noted above, *e.g*, in connection with FIGs. 1-3, hybrid computation with spiking neurons and signal restoration naturally results in a distributed number representation. The radix depends on the precision to which we choose to maintain and restore analog information. It is then natural to perform digital arithmetic operations with these numbers. Because hybrid arithmetic operations are carried out in a higher radix than binary, there are fewer stages of processing when compared to normal binary processing, and fewer switching transitions, thus improving power and area efficiency. Furthermore, the use of analog primitives to perform basic arithmetic functions improves the power and area efficiency of implementing devices as well. A number of arithmetic processing techniques will now be described that exploit these and other advantages of hybrid computing.

*Counting*

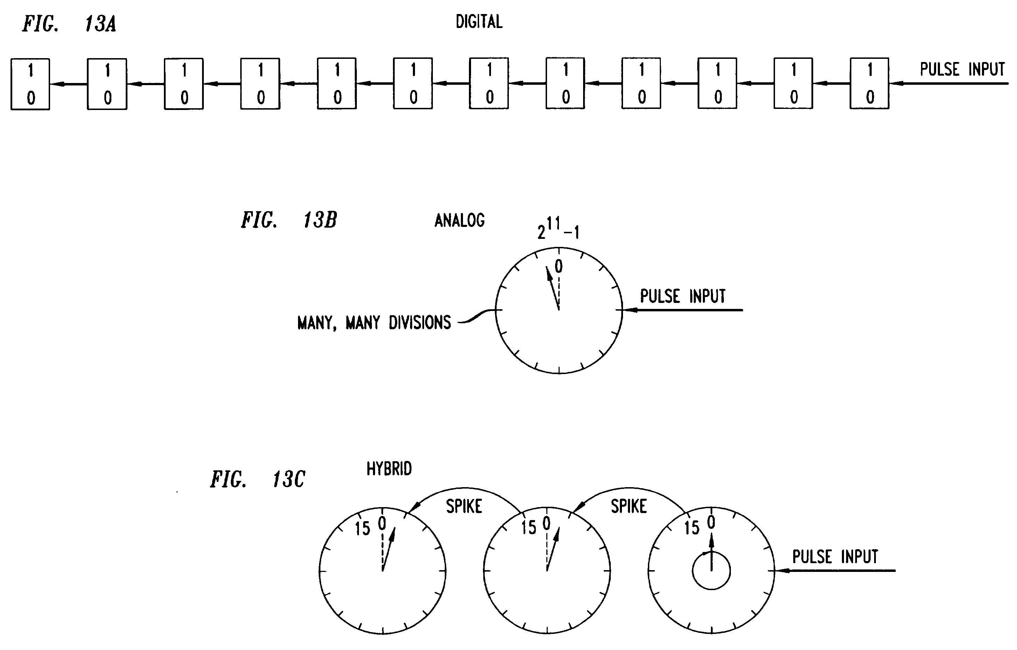

Counting is perhaps the most basic arithmetic operation. The computational question "Is the number of input pulses greater than $2^{11}$ - 1?", may be answered in a purely digital, in a purely analog, and in a hybrid counter, as illustrated by FIGs. 13A-C. In a purely digital mode of operation, illustrative pulse counting is accomplished in the manner shown in FIG. 13A by having incoming pulses clock a 12-bit digital counter, and reading the result from a counter overflow signal at the MSB location. In a purely analog mode of operation, illustrated in FIG. 13B, pulse counting is accomplished by having a neuron integrate impulses of charge that occur every time a spike is fired. The impulses of charge are advantageously chosen to be small enough that $2^{12}$ impulses just cause the neuron to fire an overranging spike. The pulse-to-charge conversion may be accomplished via the excitatory synapse circuit shown in FIG. 14A, where the value of $V_{wt}$ determines the size of the charge events. For the sake of completeness, FIG. 14B also shows an inhibitory synapse circuit capable of generating negative charge events as well.

FIG. 13C shows a hybrid mode of counting in which 3 analog neurons interact with each other such that a sequence of 16 input charge events at any one neuron causes the generation of an overranging spike that is fed to its neighbor on the left. An overranging spike from the leftmost neuron in FIG. 13C signals that more than $2^{11}$ - 1 spikes have arrived at the input. In a hybrid counter, sub-threshold analog charge values are evaluated via the subranging analog-to-digital conversion techniques described in the incorporated patent application entitled *Current-Mode Spike-Based Analog-to-Digital Conversion*. Note that the hybrid counter may also be implemented in other configurations, *e.g.*, with 6 neurons, such that 4 spikes cause an overrange spike per neuron ($4^6 = 2^{12}$), or with 4 neurons such that 8 spikes cause an overrange spike per neuron ($8^4 = 2^{12}$). If we are willing to perform analog-to-digital conversion on the sub-threshold residues, then non-integer powers of 2 may be used in the radix.

A chief benefit of described hybrid schemes is that switching power dissipation is reduced because each stage switches less frequently than a binary stage. At the same time, large amounts of spatial or power resources are not spent in trying to maintain high precision in each hybrid stage. Thus many interacting moderate-precision analog processors can operate more efficiently than can purely analog or purely digital techniques. Analog feedback or calibration techniques may be used to improve the precision per hybrid stage. Since such techniques may operate on a very slow time scale or may be performed only occasionally, they yield little power overhead, although they do consume some device area.

For reasons of noise immunity, each pulse advantageously contributes an amount of charge such that when a pulse that causes overranging arrives, the pulse causes the charge accumulated on the neuron to slightly exceed the threshold of firing. The charge contribution per pulse must also be accurate enough such that the pulse that arrives before the one that causes overranging does not itself cause overranging.

*Addition*

High-precision digital arithmetic, *e.g.*, the addition of two 32-bit numbers, is performed by having many 1-bit precise elementary adder units interact with each other through the mechanism of carries. The elementary adder units of digital arithmetic are logic circuits called full adders and half adders. Full adders take two 1-bit binary numbers $A_n$ and $B_n$. and a 1-bit binary carry $C_n$, and generate a local sum output $S_n$ and a carry output $C_{n+l}$ that is fed as an input to an adjacent higher-order channel. A half adder performs the same function as a full adder except that it does not accept a carry input $C_n$.

High-precision digital arithmetic may also be performed by present inventive hybrid computation techniques. This discussion focuses on how hybrid techniques may be used to add two 32-bit digital numbers. Other addition problems, *e.g.* how to add multiple numbers, is solved by a straightforward extension of the techniques used to solve this basic problem.

In hybrid addition techniques, the input bits are advantageously first grouped into moderate-precision chunks, typically 2-bit or 4-bit chunks. However, depending on the precision per channel in the hybrid technique any number of bits per chunk may be used. Each such chunk is converted to an analog current via a standard D/A operation. The analog currents are added through elementary analog operations described below. The interactions between channels are performed via overranging spike carries as illustrated in FIGS. 4 and 5, and pulse-to-charge synapses as illustrated, *e.g.*, in FIG. 14A and described below. The final answer on the various neuronal channels is read out by performing analog-to-digital conversion of the charge residues on each of the channels in parallel. Analog-to-digital conversion of charge residues is described in detail in my incorporated patent application entitled *Current-Mode Spike-Based Analog-to-Digital Conversion*.

*Elementary Addition Primitives*

Two elementary addition primitives that may be used in hybrid arithmetic are:

1. Kirchoff's current law (*KCL*). The basic computational primitive in such a scheme is the creation of charge by integrating the sum of two currents for a fixed time, *i.e.* $Q = (I_1 + I_2)t$. Applying the currents together and using Kirchoff's current law obtains the sum of two currents. Thus, for example, if $t = CV_T/I_0$ is the time taken for a reference current $I_0$ to cause a timing neuron to spike, $I_1 = I_0 (2D_{11} + D_{10})$, $I_2 = I_0(2D_{21} + D_{20})$, where the two input digital numbers are $D_{11}D_{10}$ and $D_{21}D_{20}$ respectively, then, by counting the number of spikes fired by a counting neuron with input current $I_1 + I_2$, we may determine the sum. The spikes from the counting neuron are fed to a 2-bit hybrid computing stage that accumulates pulses of charge as described above. If the sum is greater than 3, then, we generate an overranging spike in the hybrid counting stage that serves as a carry to the next hybrid counting stage.

We may combine the functions of the counting neuron and the hybrid counting stage into one neuron by performing divisive D/A conversion rather than multiplicative D/A conversion, *i.e.* $I_1 = I_0 (0.5D_{11} + 0.25D_{10})$ and $I_2 = I_0 (0.5D_{21} + 0.25D_{20})$. In this case, while the timing neuron charges with $I_0$, the counting neuron charges with $I_1 + I_2$. An overranging spike in the counting neuron is fed as a carry to the adjacent higher-order counting neuron on the left as shown in FIG. 4, and implemented via a pulse-to-charge synapse as shown in FIG. 14A. Thus, with divisive D/A conversion, only two neurons, a counting neuron and a timing neuron are needed for an elementary addition.

2. *Addition of residues*. The basic computational primitive in such a scheme is the creation of charge by adding two charge residues $Q = Q_1 + Q_2$. We first create a positive charge residue $Q_1$ on neuron $N_1$ by charging a timing neuron with $I_0$ and $N_1$ with $I_1 = I_0 (0.5D_{11} + 0.25D_{10})$. Simultaneously, on another neuron $N_2$, we create a negative charge residue (a residue referenced to the threshold for spiking rather than to zero) of value $Q_2$ by charging this neuron with a current $I_0 - I_2$, $I_2$ is generated from $I_0$ by $I_2 = I_0 (0.5D_{21} + 0.25D_{22})$. After the timing neuron has fired its spike, we begin to charge $N_1$ and $N_2$ with the current $I_0$ and for a duration given by the time it takes $N_2$ to spike. The charge on $N_1$ at the end of this operation then represents the sum of the currents $I_1 + I_2$. If there has been an overranging spike from $N_1$ in the process, it is fed to the $N_1$ neuron in an adjacent channel as a carry. Note that this form of addition uses the architecture of an HSM to perform an addition.

Often, both charge residues may be positive and present on two neurons, $N_1$ and $N_2$, and we may have no access to the input currents that created them. In that case, we first use a timing neuron $T$ to convert one of the residues to a negative one. Thus, by charging a timing neuron and one of the neurons, say $N_1$, with the same charging current and for a duration that is determined by the time it takes $N_1$ to fire a spike, the positive residue on $N_1$ is converted to a negative residue on $T$. We refer to this technique as *positive-to-negative residue conversion*. We may then add the positive residue on $N_2$ and the negative residue on $T$ by the technique of the previous paragraph.

Although, the Kirchoff's-current-law technique appears to be more efficient in its use of neurons and is simpler, the addition-of-residues technique is often necessary in computations where the input variables are present in charge form, and we have no access to the input currents that created these charge variables.

*Carry operations*

Overranging spikes on neurons generate spikes which are fed to the adjacent channels as bursts of charge via a pulse-to-charge synapse as shown in FIGs. 4,5 and FIG. 14A. Such synapses are designed so that a full revolution of the channel generating the spike results in a $1/r$ revolution of the channel receiving the spike, where $r$ is the radix of the number representation. However, it is important that synchronization exists amongst the channels that are adding their respective inputs and spiking-carry inputs.

When adding two 32-bit numbers via hybrid techniques with 2-bit chunking per channel, we would perform 16 additions in parallel on the 16 2-bit channels. All channels have the same $I_0$, and start their timing neurons at the same time. In order to ensure that no information is lost, as soon as an output neuron in a channel fires a spike, it must ensure that any information being fed to it is on hold for the duration of its spike. This means that any input currents being fed to it must be gated to zero, any timing neuron that is governing its operation must have its input current gated to zero, and any spiking input must be inactivated. After the spike has fired, all inputs may be reactivated to their full values. Inactivating a spiking input may imply that charge is lost from this input for the portion of the time that the output spike overlaps the input spike in duration. To prevent this loss of charge, we must lengthen the pulse width of the input spike by the amount of overlap. Techniques for performing such operations and for compensating for even higher-order errors are discussed below.

The addition is complete when all 16 channels have finished firing all of their timing spikes, and all output neurons have their spiking outputs at zero. In this situation, all carry propagations have terminated and the residues on the output neurons may be assumed to be correct. Thus, in the KCL case, the addition is complete when all timing neurons at all locations have fired a spike, and all the counting neurons have their outputs at zero. In the addition-of-residues case, the addition is complete when the timing neuron at all locations has finished firing a spike, the $N_2$ neuron at all locations has finished firing a spike, and all the $N_1$ neurons have their spiking outputs at zero. At this point, the residues on the output neurons may be used for further addition via an addition-of-residues technique, or we may perform sub-ranging analog-to-digital conversion on the output residues to obtain a final answer in digital format.

*Signal Restoration*

If restorations such as analog-to- digital conversion are performed too infrequently, *i.e.*, we keep performing successive arithmetic operations on the charge residues without restoring the residues to discrete values sufficiently frequently, then analog errors will accumulate to yield the wrong answer at the time when the restoration is eventually performed. Thus, it is important that, at any channel, too many current-charging operations or pulse-to-charge synaptic operations are not performed before a restoration is performed. However, overly frequent restorations waste time and power in analog-to-digital conversions.

For any channel, it takes an error of $2\pi$ before a false overranging spike is fired. This error is propagated down to the adjacent higher-order channel only if the latter channel has an intrinsic pulse-to-charge synaptic error. If the higher-order channel has a perfect synapse, then it is merely re-representing the error caused by the lower-order channel and the error does not propagate across channels. If, however, there is an error in the synapse of the higher-order channel, then the erroneous overranging input spike introduces some error into the higher-order adjacent channel just like any other legitimate input spike does. If there are enough input spikes into the higher-order channel, these errors may eventually accumulate to cause the higher-order channel to finally fire a false overranging spike as well. Thus, once again, it is important to perform signal restoration after a predetermined number of input operations have occurred. This number of operations may vary with application and device characteristics, but will be a routine matter of engineering design.

*Adding multiple numbers*

When adding many numbers, concern for error accumulation generally dictates that not too many of them are added on the same channel. Rather, they should be added in small groups (*e.g.* 3-4) to first create charge residues that represent partial answers. All of these residues except one are advantageously converted to negative residues. The positive-residue neuron is then charged with a standard charging current for a duration given by the time it takes all negative-residue neurons to sequentially spike one after another, when the same charging current is applied to each sequentially. The overranging spikes on the positive-residue neuron may be counted or fed to adjacent higher-order channels. If there is a large number of residues or numbers, periodic A/D restoration of the residues followed by D/A re-creation of the residues may be appropriate.

*Multiplication*

Digital multiplication is performed via the elementary 1-bit AND gate primitive, the answers from several such primitives are combined via numerous additions using full adders and half adders in an analogous fashion to longhand decimal multiplication

*Elementary Multiplication Primitive*

An elementary primitive of hybrid multiplication is $Q = It$, *i.e.* the integration of current over time to yield charge. We may implement this primitive in at least the following illustrative ways.

1. We create a negative residue proportional to one input $I_1 = I_0(0.5D_{11} + 0.25D_{10})$, by charging a neuron $N_1$ with a current $I_0 - I_1$ while a timing neuron $N_2$ is charging with the current $I_0$. After $N_2$ has finished firing a spike, we charge $N_1$ with a current given by $I_0$, while we charge $N_2$ with a current given by $I_2 = I_0(0.5D_{21} + 0.25D_{20})$, for a duration given by the time that it takes $N_1$ to spike, The answer to the multiplication is then encoded in a 4-bit quantization of the residue on $N_1$.

An alternative is to charge $N_1$ with $I_2 = I_0(2D_{21} + D_{20})$ in the second phase of the computation, *i.e.*, we use multiplicative D/A conversion rather than divisive D/A conversion in the second stage. In this scheme, overranging spikes from $N_1$ may be fed to an adjacent channel, which now holds the " 2-bit carry" or 2 most significant bits of the multiplication, while the residue on $N_1$ encodes the two least significant bits of the multiplication.

2. We may encode one input in the number of spikes input to a neuron and the other input in the synaptic weight of a pulse-to-charge synapse to perform multiplication. The number-of-spikes coding is easily created by having the input current $I_1 = I_0 (2D_{11} + D_0)$ charge a neuron $N_1$ while the input current $I_0$ charges a timing neuron $N_T$; both charging currents are on only until $N_T$ fires a spike. The spikes from $N_1$ are fed via a pulse-to-charge synapse onto a neuron $N_2$ with a synaptic weight current that is given by $I_2 = (CV_T/t_{pw})(2 * D_{21} + D_{20})$, where $t_{pw}$ is the pulse width of a spike, $C$ is the charging capacitance and $V_T$ is the threshold of neuronal firing. The value of $V_{wt}$ in FIG. 14A necessary to achieve such an equality must be experimentally adjusted or set via feedback calibration. The overranging spikes of $N_2$ are fed to an adjacent higher-order channel that encodes the carry generated from the multiplication.

*Addition of the Multiply-Primitive Answers*

Once the answers of the elementary multiply-primitive are known, we may combine these answers using the techniques of hybrid addition. All of the standard techniques of digital multiplication, *e.g.* carry-save arithmetic where the carries are not propagated immediately but passed to the adjacent channel constantly for intermediate additive processing, Wallace trees which group the additions into sets of numbers to achieve logarithmic delay depth, addition of the two final numbers that need to be added in a carry-save multiplier, pipelining to improve speed etc. may be adapted for use in the present hybrid computation techniques. Such prior techniques are described in many standard textbooks on digital arithmetic. However, in adapting such prior teachings above-described hybrid addition techniques are used to advantage, rather than using full adders and half adders. In this manner we perform addition in larger groups of numbers without generating double-digit carries. For example, we may add 5 numbers in radix 4 without generating a double-digit carry, whereas, in binary arithmetic only 3 numbers may be added without generating a double-digit carry. In addition, intermediate stages of signal restoration may be employed, and asynchronous pipelining of the general type described in my incorporated patent application entitled *Current-Mode Spike-Based Analog-to-Digital Conversion* is used rather than synchronous pipelining.

*Other arithmetic functions*

Although addition and multiplication are the most important primitives of arithmetic, our techniques are not restricted to such primitives. Any function $f(.)$, such that $I_{out} = f(\overline{I_{in}})$ may be used to preprocess the input current vector $\overline{I_{in}}$ in a hybrid arithmetic stage. We may compare the charge residue created by this current $I_{out}$ with the charge residue created by a standard charging current $I_0$ in a time duration common to two neurons; the comparisons may use the usual operations of spike counting and residue quantization that we have discussed extensively throughout this document. For example a sum-of-squares operation may be implemented by using translinear current-mode circuits to create elementary "sum-of-squares" analog primitives. The results of these various primitive operations may be combined by the techniques of overranging carry spikes and addition much as we have done for addition (combination of KCL primitives through carries) or for multiplication (combination of $Q = It$ primitives through carries and adds).

*Circuit Design*

Just as the circuit for a finite state machine is easily constructed from its finite-state diagram, a circuit for a hybrid state machine is easily constructed from its flow diagram, *e.g.*, the flow diagrams described above and in my incorporated patent application entitled *Current-Mode Spike-Based Analog-to-Digital Conversion*. Most of the circuit design may be accomplished by translating the description of the state machine into a circuit with the appropriate connectivity and logical interactions between and within building-block circuits. Three key building-block circuits in hybrid computation are a spiking neuron circuit, a toggle flip-flop and a spike-triggered finite state machine (FSM). Illustrative circuits of these respective kinds are described in the incorporated patent applications.

**Claims**

**1.** A hybrid state machine comprising

an analog dynamical system comprising

means for establishing at least one analog state for said analog dynamical system,

means for receiving digital and analog inputs, and

means for generating analog outputs, said analog outputs comprising at least one spiking signal, and

a digital finite state machine comprising

means for establishing a plurality of digital states, and

means for receiving digital and spiking analog inputs, and

means for generating digital outputs.

2. The hybrid state machine of claim 1 wherein said digital outputs comprise at least one digital control vector, said hybrid state machine further comprising means for applying said digital control vector as an input to said analog dynamical system.

3. The hybrid state machine of claim 2 wherein said digital control vector comprises a binary control vector.

4. The hybrid state machine of claim 1 wherein said means for establishing at least one analog state comprises at least one analog storage device.

5. The hybrid state machine of claim 4 wherein said analog storage devices comprise at least one capacitor.

6. The hybrid state machine of claim 3 wherein said analog dynamical system comprises means for converting an applied binary control vector to an analog control input to said analog dynamical system.

7. The hybrid state machine of claim 6 further comprising means for applying said analog inputs and said analog control inputs to said analog dynamical system to said means for establishing at least one analog state to effect a modification of the state of said analog dynamical system.

8. The hybrid state machine of claim 1 wherein said means for establishing at least one digital state comprises at least one digital storage device.

9. The hybrid state machine of claim 8 wherein said digital storage devices comprise at least one spike-triggered flip-flop and means for applying spiking outputs of said analog dynamical system to at least one spiking input to said spike-triggered flip-flop.

10. The hybrid state machine of claim 1 wherein said means for generating analog outputs comprises at least one means for generating spiking analog output signals.

11. The hybrid state machine of claim 10 wherein said means for generating spiking analog output signals comprises at least one spiking neuron circuit.

12. The hybrid state machine of claim 11 wherein each said spiking neuron circuit comprises means for accumulating charge on a capacitor in response to at least one applied analog signal and means for generating a spiking signal when said charge exceeds a predetermined level.

13. The hybrid state machine of claim 12 wherein said at least one applied analog signal comprises a signal based on at least one spiking signal from at least one other spiking neuron circuit.

14. The hybrid state machine of claim 13 wherein said applied analog signal comprises an analog signal based on a count of spikes from said at least one other spiking neuron circuit.

15. The hybrid state machine of claim 4 further comprising means for applying an analog signal to said at least one capacitor in response to a predetermined number of spiking signals from at least one other spiking neuron circuit.

16. The hybrid state machine of claim 15 wherein said means for applying comprises a counter for counting said predetermined number of spiking signals and a digital-to-analog converter for converting an output of said counter to an analog signal.

17. The hybrid state machine of claim 4 further comprising means for regenerating signals stored at said at least one analog storage device.

18. The hybrid state machine of claim 17 wherein said means for regenerating signals comprises means for converting said analog signals stored at said at least one analog storage device to digital signals.

19. The hybrid state machine of claim 18 wherein said means for converting further comprises means for storing said digital signals.

20. The hybrid state machine of claim 18 wherein said means for regenerating further comprises

    means for initializing said at least one analog storage device for which stored analog signals are being regenerated,

    means for converting said digital signals into regenerated analog signals, and

    means for applying said regenerated analog signals to respective ones of said at least one analog storage devices for which stored analog signals are being regenerated.

21. A hybrid circuit for selecting a particular input signal from among a set of $N$ input signals, said particular signal having an extreme value as compared to others of said input signals, the circuit comprising

    an analog portion comprising a plurality of spiking neuron circuits, each arranged to accumulate a charge in response to the application of a respective one of said input signals and to generate a spiking output signal when said charge reaches a predetermined level,

    a digital portion for maintaining respective states in response to spiking signals received from said analog portion,

    means for setting a first state in said digital portion indicating a first spiking neuron circuit as the spiking neuron circuit that first produced a spiking output signal,

    means responsive to said digital portion being in said first state for inhibiting the further application of an input signal to said first spiking neuron circuit and for identifying the input signal to said first spiking neuron circuit as said particular signal.

22. The hybrid circuit of claim 21 further comprising means for inhibiting the further application of input signals to said neuron circuits other than said first neuron circuit.

23. The hybrid circuit of claim 21 wherein said particular signal is the signal among said input signals having the greatest magnitude.

24. The hybrid circuit of claim 21 further comprising for $i = 2, ..., N$

    means for setting an $i$th state in said digital portion indicating an $i$th spiking neuron circuit as the spiking neuron circuit that first produced a spiking output signal after said inhibiting of application of said $(i - 1)$th input signal to a spiking neuron circuit,

    means responsive to said digital portion being in said first state for inhibiting the further application of an input signal to said $i$th spiking neuron circuit and for identifying the input signal to said $i$th spiking neuron circuit as the input signal having a value that is the $i$th most extreme of said input values.

25. A system for classifying a plurality of inputs, comprising

    a plurality of neurons, each receiving a current proportional to a respective one of said inputs,

means for identifying the input to the first neuron to generate a spiking output as the input having a desired property.

26. The system of claim 25 further comprising means for terminating the input current to all others of said neurons than said first neuron.

27. The system of claim 25 further comprising means for terminating the input current to said first neuron, and means for identifying the order of spiking outputs from one or more neurons other than said first neuron.

*FIG. 1A*

ANALOG
8 BITS/CHANNEL

*FIG. 1B*

DISTRIBUTED
ANALOG
2 BITS/CHANNEL

*FIG. 1C*

DIGITAL
1 BIT/CHANNEL

*FIG. 2*

EP 1 089 221 A2

## FIG. 3

*FIG. 4*

*FIG. 5*

## FIG. 6
(PRIOR ART)

DIGITAL INPUTS → $\overline{DI}$ | COMBINATIONAL LOGIC | $\overline{OD(\cdot)}$ → DIGITAL OUTPUTS $\overline{DO}$

$ND(\cdot)$

$D_{n+1}$ | DIGITAL STATE D | $D_n$

CLOCK

## FIG. 7

SPIKED-TRIGGERED FSM ⌐710

$\overline{ND(\cdot)}$ | COMBINATIONAL LOGIC ∼717

$\overline{DI}$ →

711

| D | I | G | I | T | A | L |
| DS | S | T | A | T | E | ∼715 |

$Cf(\cdot)$

$\overline{OD(\cdot)}$ | $\overline{DO}$ →

712

BINARY CONTROL VECTOR ∼ $\overline{C}$ 730

$\overline{Sp}$ ∼ SPIKES ∼731

ANALOG DYNAMICAL SYSTEM ⌐720

$\overline{AS}$    $\overline{Spf}(\cdot)$

| A | N | A | L | O | G | S | T | A | T | E | $g(\cdot)$ |

$\overline{AI}$ →

721

$\overline{AO}$ →

722

727 ∼ ANALOG PROCESSING | $\overline{f(\cdot)}$

FIG. 8

FIG. 9

NEURON: 0    1    2    3    4    5

FIG. 10

*FIG. 11*

*FIG. 14A*

*FIG. 14B*

FIG. 12A

FIG. 12B

EP 1 089 221 A2

FIG. 13A

DIGITAL

PULSE INPUT

FIG. 13B

ANALOG

$2^{11}-1$

MANY, MANY DIVISIONS

PULSE INPUT

FIG. 13C

HYBRID

SPIKE

SPIKE

15 0

15 0

15 0

PULSE INPUT

EP 1 089 221 A2